Europäisches Patentamt

European Patent Office

Office européen des brevets

(11) Veröffentlichungsnummer: **0 246 557**

**A1**

# EUROPÄISCHE PATENTANMELDUNG

(21) Anmeldenummer: **87106960.5**

(22) Anmeldetag: **14.05.87**

(51) Int. Cl.4: **C25F 3/16** , C23F 3/04 , F17C 1/10

(30) Priorität: **21.05.86 DE 3617092**

(43) Veröffentlichungstag der Anmeldung:
**25.11.87 Patentblatt 87/48**

(84) Benannte Vertragsstaaten:
**AT BE CH DE ES FR GB IT LI NL SE**

(71) Anmelder: **POLIGRAT GMBH**
**Valentin-Linhof-Strasse 19**
**D-8000 München 82(DE)**

(72) Erfinder: **Ruhstorfer, Friedrich**
**Blütenstrasse 22**
**D-8046 Garching(DE)**
Erfinder: **Piesslinger-Schweiger, Siegfried**
**Gustav-Meyrink-Strasse 26**
**D-8000 München 60(DE)**

(74) Vertreter: **von Hellfeld, Axel et al**
**Schweigerstrasse 2**
**D-8000 München 90(DE)**

(54) **Innenoberfläche einer Gasflasche und Verfahren zu deren Herstellung..**

(57) Eine Innenoberfläche von Gasflaschen wird zur Verbesserung des Adsorptions-und Desorptionsverhaltens bezüglich der Füll-Gase sowie zur Vermeidung der Entstehung von Rißkeimen bei dynamischen Belastungen durch chemisches und/oder elektrochemisches Polieren hergestellt, wobei zumindest eine Werkstoffschicht abgetragen wird.

FIG. 1

EP 0 246 557 A1

## Innenoberfläche einer Gasflasche und Verfahren zu deren Herstellung

Die Erfindung betrifft Innenoberflächen von Gasflaschen sowie ein Verfahren und eine Vorrichtung zur Herstellung derselben.

Gase der verschiedensten Art werden zum Verbrauch in der Industrie, im Handwerk, der wissenschaftlichen Forschung etc. in Gasflaschen unter Druck abgefüllt und transportiert. Die Gasflaschen werden üblicherweise aus niedrig legierten Stählen durch Warmumformen hergestellt. Die Warmformung der Gasflaschen führt innenseitig zu Verzunderungen an der Oberfläche.

Herkömmlich werden die Innenoberflächen von Gasflaschen mechanisch durch Sand-Strahlen oder Scheuern oder auch durch chemisches Beizen gereinigt.

Die mit herkömmlichen Verfahren hergestellten Innenoberflächen von Gasflaschen haben folgende Nachteile:

1) Aus der Innenoberfläche der Gasflaschen können sich Partikel lösen, die bei der Entnahme des Gases aus der Flasche mit dem Gasstrom mitgerissen werden und diesen verunreinigen.

2) Bei der Befüllung der Gasflaschen mit Gasmischungen aus zwei oder mehr Komponenten zeigen die Innenoberflächen gegenüber den einzelnen Komponenten unterschiedliches Adsorptions- und Desorptionsverhalten. Das heißt, die einzelnen Bestandteile der Gas-Mischung werden auf der Innenoberfläche unterschiedlich physisorbiert oder chemisorbiert. Je nach der geometrischen Struktur und der chemischen Zusammensetzung der Oberfläche treten zwischen derselben und den eingefüllten Gasen unterschiedliche physikalische oder chemische Wechselwirkungen auf, die zur Folge haben, daß die Gase in unterschiedlicher Menge an der Innenoberfläche haften. Auch die Bindungskräfte zwischen den Gasatomen oder -molekülen und der Oberfläche hängen stark von den Oberflächenparametern ab. Die vorstehenden Phänomene haben zur Folge, daß bei längerer Lagerzeit der Gasgemische in den Gasflaschen die Mischungsverhältnisse im freien Gas (also dem nicht an der Oberfläche adsorbierten Gas) verändert werden. Auch die Desorption der Gasatome und -moleküle von den Innenoberflächen hängt empfindlich von der geometrischen Struktur und der chemischen Zusammensetzung der Oberfläche ab. Beim Entnehmen der Gase aus der Gasflasche kann deshalb druckabhängig eine Änderung der Desorptionsrate der einzelnen Gaskomponenten auftreten, was ebenfalls zur Folge haben kann, daß die aus der Gasflasche tatsächlich entnommene Gasmischung nicht den Sollwerten der Konzentrationen entspricht.

3) Bei der Warmformung der Gasflaschen und der mechanischen Reinigung der Innenoberflächen können nur schwer erkennbare Oberflächenschäden, wie insbesondere Rißkeime, auftreten. Im Betrieb wird eine Gasflasche vielfach beim Füllen sehr hohen dynamischen Belastungen durch den Fülldruck ausgesetzt und später beim Entleeren der Flasche wieder entlastet. Diese wiederholten dynamischen Belastungen der Innenwände der Gasflaschen können zu sogenannten Ermüdungsanrissen führen, weshalb aus Sicherheitsgründen Gasflaschen häufig schon nach einer relativ be grenzten Zahl von Ladezyklen aus dem Verkehr gezogen werden müssen. Insbesondere bei Wasserstoffflaschen müssen hohe Sicherheitsanforderungen erfüllt werden, weshalb die Lebensdauer einer Wasserstoffflasche relativ begrenzt ist.

Der Erfindung liegt die Aufgabe zugrunde, eine Innenoberfläche für Gasflaschen sowie ein Verfahren und eine Vorrichtung zur Herstellung derselben zu Schaffen, welche es ermöglichen, daß Beeinflussungen der aus der Gasflasche entnommenen Gaskonzentrationen durch die Adsorptionscharakteristiken der Innenoberfläche weitgehend reduziert sind. Überdies soll die Innenoberfläche auch Materialermüdungen aufgrund von dynamischen Belastungen weitgehend vermeiden.

Die erfindungsgemäße Lösung dieser Aufgabe ist in den Patentansprüchen gekennzeichnet.

Die Erfindung macht sich die überraschende Erkenntnis zu Nutze, daß die Innenoberfläche einer Gasflasche gegenüber dem Stand der Technik hinsichtlich des Adsorptionsverhaltens und der Lebensdauer dann wesentlich bessere Eigenschaften aufweist, wenn sie chemisch und/oder elektrochemisch derart poliert wird, daß zumindest eine Werkstoffschicht abgetragen ist. Eine derart erzeugte Oberfläche zeigt nicht das ungleichmäßige und selektive Adsorptions-und Desorptionsverhalten von auf andere Weise hergestellten Innenoberflächen. Auch ist die Bildung von schädlichen Rißkeimen in der Oberfläche weitgehend reduziert, so daß auch bei oftmaliger dynamischer Belastung der Gasflasche die Gefahr von Brüchen weitgehend vermindert ist.

Gemäß einer ersten Variante der Erfindung wird die Innenoberfläche der Gasflasche rein chemisch auf der Basis von Fluoridsalzen und Wasserstoffperoxid, insbesondere unter Verwendung von Ammoniumtifluorid, poliert. Dabei ist kein elektrischer Stromfluß erforderlich.

Gemäß einer weiteren Variante der Erfindung wird die Innenoberfläche unter Einsatz von zumindest einer Innenkathode elektrochemisch mittels eines Elektrolyten poliert. Dabei ist die Gasflasche anodisch geschaltet. Der Elektrolyt wird in an sich bekannter Weise auf der Basis von Schwefelsäure, Phosphorsäure und/oder Chromsäure gebildet.

Es wird angenommen, daß die experimentell bestätigten verbesserten Adsorptions-und Desorptionseigenschaften der erfindungsgemäßen Innenoberflächen sowohl auf deren geometrisch glattere Struktur als auch deren chemische Zusammensetzung zurückzuführen ist.

Die erfindungsgemäße Oberfläche hat gegenüber dem unpolierten Ausgangszustand eine wesentlich verringerte Ausdehnung und zeichnet sich überdies durch eine große Passivität in ihrem Adsorptionsverhalten gegenüber den einzelnen Gaskomponenten aus.

Auch ist die erfindungsgemäße Oberfläche frei von Partikeln, die beim Entleeren der Gasflasche im Gasstrom mitgerissen werden können.

Das erfindungsgemäß angewandte Verfahren des chemischen und/oder elektrochemischen Polierens ist als solches gut bekannt. Beispielsweise sei auf die europäischen Patentanmeldungen 82 104 945.9 und 82 104 946.7 sowie das deutsche Gebrauchsmuster 80 11 918 hingewiesen.

Nachfolgend werden Ausführungsbeispiele der Erfindung anhand der Zeichnung näher beschrieben. Es zeigt:

Fig. 1 schematisch einen Schnitt durch eine Gasflasche, in welche eine Kathode eingeführt ist;

Fig. 2 einen Schnitt entsprechend Fig. 1 mit einer geänderten Kathode und

Fig. 3 einen den Fig. 1 und 2 entsprechenden Schnitt mit einer weiteren Ausführungsform einer Kathode.

Die Figuren zeigen jeweils schematisch eine Gasflasche 10 aus Stahl oder einer Stahl-Legierung. Die Innenoberflächen 10' der Gasflaschen 10 sollen hergestellt werden.

Hierzu wird die Innenoberfläche 10' der Gasflaschen elektrochemisch poliert. Das elektrochemische Polierverfahren ist als solches bekannt. Die Gasflasche 10 wird als Anode geschaltet und es wird eine Kathode 12 sowie ein Elektrolyt (nicht gezeigt) in das Innere der Flasche 10 eingeführt. Die Kathode 12 liegt gegenüber der Gasflasche 10 auf negativem Potential.

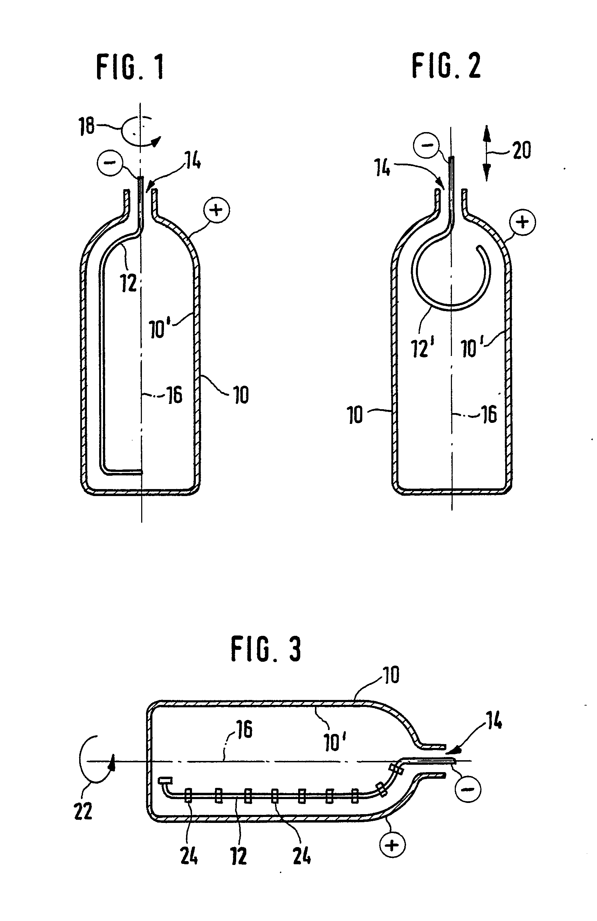

Durch die mittels eines Ventils (nicht gezeigt) verschließbare Öffnung 14 der Gasflasche 10 wird eine Kathode 12 in das Innere der Gasflasche eingeschoben. Gemäß Fig. 1 ist die Kathode 12 derart elastisch vorgeformt, daß sie im Inneren der Gasflasche 10 eine Form annimmt, die der Innenkontur der Gasflasche weitgehend angepaßt ist, so daß die Kathode 12 weitgehend einen konstanten

Abstand zur Innenoberfläche 10' der Gasflasche einnimmt und die elektrischen Potentialverhältnisse homogen sind. Die Kathode 12 wird dann um die Achse 16 im Sinne des Pfeiles 18 gedreht, so daß die Innenoberfläche 10' der Gasflasche 10 jeweils partiell elektrochemisch poliert wird.

Es wird ein Elektrolyt auf der Basis von Phosphorsäure-Schwefelsäure-Chromsäure verwendet.

Fig. 2 zeigt eine gegenüber Fig. 1 abgeänderte Kathodenform. Die Kathode 12' ist hakenförmig ausgebildet und paßt sich somit der Krümmung der Gasflasche 10 gut an. Die Kathode 12' wird in Richtung des Pfeiles 20 beim Elektropolieren in der Gasflasche 10 hin-und hergeschoben und dabei auch um die Achse 16 gedreht, so daß alle Teile der Innenoberfläche 10' der Gasflasche 10 gleichmäßig behandelt werden.

Fig. 3 zeigt ein weiteres Ausführungsbeispiel einer durch die Öffnung 14 in die Gasflasche 10 einschiebbaren Kathode 12". Bei diesem Ausführungsbeispiel ist die Kathode 12" entsprechend derjenigen gemäß Fig. 1 ausgestaltet, jedoch zusätzlich mit Abstandsstücken 24 versehen, die gewährleisten, daß die Kathode immer einen genau vorgegebenen Abstand zur Innenoberfläche 10' einnimmt. Die Kathode wird im Drehsinn des Pfeiles 22 um die Achse 16 gedreht.

## Ansprüche

1. Verfahren zum Herstellen der Innenoberfläche einer Gasflasche aus Stahl oder einer Stahl-Legierung,

dadurch **gekennzeichnet,**

daß die Innenoberfläche (10') chemisch und/oder elektrochemisch derart poliert wird, daß zumindest eine Werkstoffschicht abgetragen wird.

2. Verfahren nach Anspruch 1,

dadurch **gekennzeichnet,**

daß die Innenoberfläche (10') chemisch auf der Basis von Ammoniumlifluorid/Wasserstoffperoxid poliert wird.

3. Verfahren nach Anspruch 1,

dadurch **gekennzeichnet,**

daß die anodisch geschaltete Innenoberfläche (10') elektrochemisch mittels eines Elektrolyten auf der Basis Schwefelsäure/Phosphorsäure/Chromsäure mittels einer Innenkathode (12, 12', 12") poliert wird.

4. Vorrichtung zum Behandeln der Innenoberfläche von Gasflaschen aus Stahl oder Stahl-Legierungen,

**gekennzeichnet** durch

zumindest eine in das Innere der einen Elektrolyt enthaltenden Gasflasche (10) einführbare Kathode (12), die zu elektrochemischen Polieren der anodi-

sch geschalteten Innenoberfläche (10') mit zumindest annähernd konstantem Abstand zur Innenoberfläche (10') positionierbar ist.

5. Vorrichtung nach Anspruch 4,
dadurch **gekennzeichnet** ,
daß die Kathode(n) (12, 12', 12") derart elastisch vorgeformt ist (sind), daß sie durch die Öffnung (14) der Gasflasche (10) einschiebbar ist (sind) und im Inneren der Gasflasche (10) eine Form annimmt (annehmen), die der Innenkontur der Gasflasche angepaßt ist.

6. Innenoberfläche einer Gasflasche aus Stahl oder einer Stahl-Legierung,
dadurch **gekennzeichnet**,
daß die Innenoberfläche (10') mit einem Verfahren gemäß einem der Ansprüche 1, 2 oder 3 hergestellt ist.

# FIG. 1

# FIG. 2

# FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | FR-A- 978 022 (PARKER)<br><br>* Zusammenfassung, Punkt 1 *<br><br>--- | 1,4,5,<br>6 | C 25 F 3/16<br>C 23 F 3/04<br>F 17 C 1/10 |
| Y | US-A-2 475 586 (BARTLET)<br><br>* Das ganze Dokument *<br><br>--- | 1,4,5,<br>6 | |
| A | DE-A-1 928 307 (LANCY)<br>* Patentanspruch 1 *<br><br>--- | 2 | |
| A | METAL FINISHING ABSTRACTS, Band 21, Nr. 1, Januar/Februar 1979, Seite 7G, GB<br><br>----- | 3 | |

RECHERCHIERTE
SACHGEBIETE (Int. Cl.4)

C 25 F 3/16
C 25 F 3/24
C 23 F 3/04
C 23 F 3/06
F 17 C 1/10
F 17 C 13/12

Der vorliegende Recherchenbericht wurde für alle Patentansprüche erstellt.

| Recherchenort | Abschlußdatum der Recherche | Prüfer |
|---|---|---|
| DEN HAAG | 07-09-1987 | VAN LEEUWEN R.H. |